# EUROPEAN PATENT APPLICATION

(11) **EP 4 825 906 A1**
(43) Date of publication of application: **21.10.2026**
(21) Application number: 24903757.3
(22) Date of filing: 12.12.2024
(51) Int. Cl.: C08L 3/00, C08K 5/09, C08K 5/053, C08K 5/1545, C08L 101/16

(54) **COMPOSITION, MOLDED ARTICLE, COATED ARTICLE, POUCH, AND PACKAGING MATERIAL**

(30) Priority: 12.12.2023 JP 2023209133
(71) Applicant: Kuraray Co., Ltd., Kurashiki-shi, Okayama 710-0801 (JP)
(72) Inventor: BABA, Masahiro, Kurashiki-shi, Okayama 710-0801 (JP); SATO, Tomohiko, Kurashiki-shi, Okayama 710-0801 (JP)
(74) Representative: Müller-Boré & Partner Patentanwälte PartG mbB
(86) International application number: PCT/JP2024/044018
(87) International publication number: WO 2025/127104

(57) **Abstract**

The present invention relates to a composition comprising a starch derived from a bulb or a derivative thereof, and a plasticizer, wherein a total amount of the starch derived from a bulb or the derivative thereof and the plasticizer is 50 mass% or more with respect to a total mass of the composition.

## Description

### TECHNICAL FIELD

The present invention relates to a composition and a molded article, a coated article, a pouch, and a packaging material containing the composition.

### BACKGROUND ART

Conventionally, a composition in which various additives are blended in starch is used, and for example, there are applications for a molded article such as a film or a coated article, and the like. As a composition containing starch and an additive, for example, a composition to which starch, a sweet component, and a sour component are added is disclosed (Patent Document 1).

### PRIOR ART DOCUMENT

### PATENT DOCUMENT

Patent Document 1: JP-A-2007-014640

### SUMMARY OF THE INVENTION

### PROBLEMS TO BE SOLVED BY THE INVENTION

However, when the composition described in Patent Document 1 is formed into a film and used, for example, as a form of a pouch, the stress and toughness thereof are not necessarily sufficient, and there is a possibility that breakage or the like may occur during transportation. In the case of using as the pouch, water solubility may be required. However, it has been difficult to improve stress and toughness while having water solubility.

Therefore, an object of the present invention is to provide a composition capable of forming a molded article excellent in stress, toughness, and water solubility.

### SOLUTIONS TO THE PROBLEMS

As a result of intensive studies to solve the problems, the present inventors have found that the problems can be solved, and have completed the present invention. That is, the present invention includes the following preferred embodiments.
[1] A composition comprising a starch derived from a bulb or a derivative thereof, and a plasticizer, wherein
   a total amount of the starch derived from a bulb or the derivative thereof and the plasticizer is 50 mass% or more with respect to a total mass of the composition.
[2] A composition comprising a starch having an amylose content of 5 to 25 mass% or a derivative thereof, and a plasticizer, wherein
   a total amount of the starch having an amylose content of 5 to 25 mass% or the derivative thereof and the plasticizer is 50 mass% or more with respect to a total mass of the composition.
[3] The composition according to [1] or [2], wherein the starch is at least one selected from the group consisting of potato starch, sweet potato starch, tapioca starch, lily bulb starch, taro starch, Chinese yam starch, lotus root starch, kudzu starch, and arrowhead starch.
[4] The composition according to any one of [1] to [3], wherein the starch is potato starch and/or tapioca starch.
[5] The composition according to any one of [1] to [4], wherein a content of the starch or the derivative thereof is 10 to 98 mass% with respect to the total mass of the composition.
[6] The composition according to any one of [1] to [5], wherein the plasticizer is at least one selected from the group consisting of a polyhydric alcohol, a hydroxy acid, a monosaccharide, and a disaccharide.
[7] The composition according to any one of [1] to [6], wherein a content of the plasticizer is 2 to 90 mass% with respect to the total mass of the composition.
[8] The composition according to any of [1] to [7], further comprising at least one polysaccharide.
[9] The composition according to [8], wherein the polysaccharide is at least one selected from the group consisting of carrageenan, alginic acid, guar gum, xanthan gum, hydroxyalkyl cellulose, alkyl cellulose, tamarind seed gum, locust bean gum, tara gum, and derivatives thereof.
[10] The composition according to [8], wherein the polysaccharide is at least one selected from the group consisting of carrageenan and derivatives thereof.
[11] A molded article comprising the composition according to any one of [1] to [10].
[12] A coated article comprising a substrate coated with the composition according to any one of [1] to [10].
[13] The molded article according to [11], wherein the molded article has a maximum stress of 4 MPa or more and/or a toughness of 440 or more.
[14] The molded article according to [11] or [13], wherein the molded article is a water-soluble film or a fiber.
[15] A pouch comprising the molded article according to [11], [13], or [14].
[16] The pouch according to [15], wherein the pouch comprises at least one selected from the group consisting of a cleaning agent, a softener, and a perfume therein.
[17] A packaging material comprising the molded article according to [11], [13], or [14].

### EFFECTS OF THE INVENTION

According to the present invention, it is possible to provide a composition capable of forming a molded article excellent in stress, toughness, and water solubility.

### DETAILED DESCRIPTION

Hereinafter, embodiments of the present invention will be described in detail. Note that the following description exemplifies the embodiments of the present invention, and the present invention is not intended to be limited to the following embodiments. Note that the plurality of upper limit values and lower limit values described in the present specification can be arbitrarily combined to form a suitable numerical range. In the present specification, stress, elongation, toughness and/or compressive strength of a molded article, a water-soluble film, a pouch, a fiber and/or a coated article may be referred to as "mechanical strength".

### [Composition]

The composition of the present invention contains a starch derived from a bulb or a derivative thereof, and a plasticizer, and the total amount of the starch derived from a bulb or the derivative thereof and the plasticizer is 50 mass% or more with respect to the total mass of the composition.

### <Starch>

The composition of the present invention contains a starch derived from a bulb or a derivative thereof. In the present specification, the term "bulb" refers to a vegetative organ or the like formed by deformation and enlargement of nutrients accumulated in a specific part such as a root, a stem, and a leaf of a plant. The bulb can be classified into, for example, a scaly bulb (short stem with layered leaves surrounding the short stem), a corm (rounded swollen stem), a tuber (rounded swollen underground stem), a rhizome (swollen underground stem growing in a horizontal direction), a tuberous root (swollen root), a rhizophore (part similar to both a root and a stem), and the like.

Examples of the starch derived from a bulb include potato starch, arrowhead starch (both tubers), sweet potato starch, tapioca starch, cassava starch, kudzu starch (all tuberous roots), lily bulb starch (scaly bulb), taro starch, konjac starch (both corms), Chinese yam starch, Japanese mountain yam starch (both rhizophores), and lotus root starch and bracken starch (both rhizomes). The starch derived from a bulb is preferably at least one selected from the group consisting of potato starch, sweet potato starch, tapioca starch, lily bulb starch, taro starch, Chinese yam starch, lotus root starch, kudzu starch, and arrowhead starch, and more preferably potato starch and/or tapioca starch, because the stress, toughness, and water solubility of the resulting molded article are further enhanced. The starch may be used singly or in combination of two or more thereof.

The derivatives of these starches derived from bulbs are not particularly limited, and examples thereof include etherified starch, esterified starch, cationized starch, crosslinked starch, oxidized starch, and pregelatinized starch.

Examples of the etherified starch include alkyl etherified starches such as methyl etherified starch; carboxyalkyl etherified starches such as carboxymethyl etherified starch; hydroxyalkyl etherified starches such as etherified starch having a hydroxyalkyl group having, for example, 2 to 6 carbon atoms; allyl etherified starch; aminoalkyl etherified starch, and ammonium alkyl etherified starch. Examples of the hydroxyalkyl group having 2 to 6 carbon atoms include a hydroxyethyl group, a hydroxypropyl group, and a hydroxybutyl group.

Examples of the esterified starch include esterified starches having a structural unit derived from a carboxylic acid, such as an esterified starch having a structural unit derived from acetic acid; esterified starches having a structural unit derived from a dicarboxylic anhydride, such as an esterified starch having a structural unit derived from maleic anhydride, an esterified starch having a structural unit derived from phthalic anhydride, or an esterified starch having a structural unit derived from octenylsuccinic anhydride; and esterified starches having a structural unit derived from an oxoacid, such as a nitrate esterified starch, a sulfate esterified starch, a carbonate esterified starch, a phosphate esterified starch, and a urea phosphate esterified starch.

Examples of the cationized starch include a reaction product of starch and 2-diethylaminoethyl chloride, a reaction product of starch and 2,3-epoxypropyltrimethylammonium chloride.

Examples of the crosslinked starch include formaldehyde crosslinked starch, epichlorohydrin crosslinked starch, phosphate crosslinked starch, acrolein crosslinked starch, and electron beam crosslinked starch.

Examples of the oxidized starch include oxidized starch oxidized with sodium hypochlorite, oxidized starch oxidized with periodic acid or periodate, oxidized starch oxidized with hydrogen peroxide, and oxidized starch oxidized with 2,2,6,6-tetramethylpiperidine1-oxyl free radical (TEMPO).

Derivatives of these starches can be obtained by a method commonly used in the art. In addition, the starch or a derivative thereof may be used singly or in combination of two or more thereof. Further, two or more of different derivatization treatments may be performed on one starch. In an embodiment of the present invention, when the composition contains a derivative of starch, the stress, toughness and water solubility of the resulting molded article tend to increase.

In a preferred embodiment of the present invention, the derivative of starch is preferably an etherified starch, a crosslinked starch, or an oxidized starch, more preferably hydroxyalkyl etherified starch, phosphate crosslinked starch, or oxidized starch oxidized with sodium hypochlorite, because the stress, toughness, and water solubility of the resulting molded article are more likely to be increased.

Since starch contains DNA derived from the plant of origin, the type of origin of starch can be determined by examining the presence or absence of a DNA band unique to the plant of origin by, for example, a PCR method. Even in the case of a composition containing a plurality of types of starches, the type of each starch can be determined by the PCR method. In addition, the content of each starch can be measured by specifying the type of each starch by, for example, the PCR method and then measuring the amylose content. As the starch, a commercially available starch whose origin is known may be used.

In the present invention, the amylose content in the starch derived from a bulb is preferably 5 to 25 mass%, more preferably 5 to 23 mass%, still more preferably 5 to 22 mass%, and still even more preferably 6 to 21 mass%, and may be, for example, 7 to 20 mass%, 8 to 18 mass%, or 10 to 17 mass%. When the amylose content in the starch derived from a bulb is within the range, the stress, toughness, and water solubility of the resulting molded article can be more excellent. The content of amylose in starch can be measured, for example, from the absorbance at a wavelength of 620 nm when iodine is adsorbed to starch according to the method described in "the Ministry of Agriculture, Forestry and Fisheries Notification No. 332 Standard Measurement Method on March 14, 2001". When two or more starches are contained in the composition, the amylose content means an average amylose content, which is a weighted average value in consideration of the constituent ratios of the two or more starches.

The water content in the starch derived from a bulb is preferably 0 to 20 mass%, and more preferably 5 to 15 mass%. The water content in the starch can be determined by, for example, a halogen moisture meter, or a Karl Fischer moisture meter.

The protein content in the starch derived from a bulb is preferably 0 to 10 mass%, more preferably 0 to 5 mass%, still more preferably 0 to 1 mass%, still even more preferably 0 to 0.5 mass%, and may be 0 mass%. The protein content in the starch can be determined by, for example, the Kjeldahl method, or the Dumas method.

The lipid content in the starch derived from a bulb is preferably 0 to 2 mass%, more preferably 0 to 1 mass%, still more preferably 0 to 0.2 mass%, and may be 0 mass%. The lipid content in the starch can be determined by, for example, a liquid chromatography method, or gas chromatography.

The present inventors have conducted studies focusing on starch, and found that a molded article containing a composition containing a starch derived from a bulb or a derivative thereof and a plasticizer is unexpectedly excellent in stress, toughness, and water solubility. The reason for this is not clear, but it is presumed that since the molecular weight of amylose contained in the starch derived from a bulb is relatively large, the stress and toughness of the resulting molded article are increased, and the amylose content is relatively small, so that the resulting molded article is excellent in water solubility.

The content of the starch or the derivative thereof is preferably 10 to 98 mass%, more preferably 15 to 95 mass%, still more preferably 20 to 90 mass%, still even more preferably 25 to 85 mass%, particularly preferably 30 to 80 mass%, more particularly preferably 32 to 78 mass%, extremely preferably 40 to 75 mass%, more extremely preferably 50 to 75 mass%, 55 to 73 mass%, 57 to 70 mass%, 60 to 70 mass%, 61 to 70 mass%, or 62 to 69 mass% with respect to the total mass of the composition. When the content of the starch or the derivative thereof is within the range, the resulting molded article can be excellent in stress, toughness, and water solubility.

### <Plasticizer>

The composition of the present invention contains a plasticizer. When the composition contains a plasticizer, processability such as ease of film formation, pouching, spinning, and the like of a molded article obtained from the composition may be improved. The plasticizer used in the composition of the present invention is preferably at least one selected from the group consisting of a polyhydric alcohol, a hydroxy acid, a monosaccharide, and a disaccharide. These compounds may reduce the interaction between starches or derivatives thereof. In addition, since these compounds combine with starch via hydrogen bonding to form a higher order network, it is possible to further increase, in particular, elongation of a molded article obtained from the composition in addition to improvement of the processability, and as a result, the toughness can also be excellent. The plasticizer may be used singly or in combination of two or more thereof.

Examples of the polyhydric alcohol include glycerin, diglycerin, sorbitol, alkylene glycols (for example, alkylene glycols having 2 to 10 carbon atoms, such as ethylene glycol, propylene glycol, and neopentyl glycol), polyalkylene glycols (for example, diethylene glycol, triethylene glycol, tetraethylene glycol, polyethylene glycols having a molecular weight of up to 400, and polypropylene glycols having a molecular weight of up to 400), trimethylolpropane, erythritol, xylitol, 2-methyl-1,3-propanediol, maltitol, mannitol, and pentaerythritol.

Examples of the hydroxy acid include lactic acid, glycolic acid, malic acid, and tartaric acid.

Examples of the monosaccharide include glucose, mannose, galactose, fructose, and xylose.

Examples of the disaccharide include maltose, trehalose, sucrose, and lactose.

Among these, the plasticizer is preferably at least one selected from the group consisting of glycerin, diglycerin, sorbitol, alkylene glycol, neopentyl glycol, trimethylolpropane, erythritol, 2-methyl-1,3-propanediol, lactic acid, glucose, fructose, maltose, and trehalose, more preferably at least one selected from the group consisting of glycerin, ethylene glycol, sorbitol, and fructose, and still more preferably glycerin or sorbitol, from the viewpoint of further increasing the stress and elongation of the resulting molded article.

The content of the plasticizer is preferably 2 to 90 mass%, more preferably 5 to 85 mass%, still more preferably 10 to 80 mass%, still even more preferably 15 to 75 mass%, particularly preferably 20 to 70 mass%, more particularly preferably 22 to 68 mass%, extremely preferably 25 to 60 mass%, more extremely preferably 25 to 50 mass%, 27 to 45 mass%, 30 to 43 mass%, 30 to 40 mass%, 30 to 39 mass%, or 31 to 38 mass% with respect to the mass of the composition. When the content of the plasticizer is within the range, processability and elongation of the molded article can be further enhanced.

In the present invention, the total amount of the starch derived from a bulb or the derivative thereof and the plasticizer in the composition is 50 mass% or more with respect to the total mass of the composition. When the total amount of the starch derived from a bulb or the derivative thereof and the plasticizer is less than 50 mass%, a molded article excellent in stress, toughness and water solubility cannot be obtained from the composition. The total amount of the starch derived from a bulb or the derivative thereof and the plasticizer in the composition is preferably 50 to 100 mass%, more preferably 55 to 100 mass%, still more preferably 60 to 100 mass%, still even more preferably 65 to 100 mass%, 70 to 100 mass%, 75 to 100 mass%, 75 to 99 mass%, 75 to 95 mass%, 75 to 90 mass%, 75 to 85 mass%, or 75 to 80 mass%.

In an embodiment of the present invention, the content ratio (mass ratio) of the starch derived from a bulb or the derivative thereof or a starch having an amylose content of 5 to 25 mass% or a derivative thereof to be described later to the plasticizer in the composition is preferably 90 : 10 to 10 : 90, more preferably 80 : 20 to 20 : 80, still more preferably 75 : 25 to 25 : 75, still even more preferably 70 : 30 to 30 : 70, and particularly preferably 60 : 40 to 40 : 60, 63 : 37 to 37 : 63, or 65 : 35 to 35 : 65. When the content ratio of the starch or the derivative thereof to the plasticizer is within the range, the stress, toughness and water solubility of a molded article obtained from the composition can be enhanced.

### <Polysaccharide>

In an embodiment of the present invention, the composition of the present invention preferably further contains at least one polysaccharide in addition to the starch and the plasticizer. When the composition further contains a polysaccharide, the polysaccharide combines with starch via hydrogen bonding to form a higher order network, and thus, in particular, the stress of the resulting molded article can be further improved.

The polysaccharide refers to a carbohydrate composed of 10 or more monosaccharides bonded together. Examples of the polysaccharide include chitin, chitosan, cellulose, hemicellulose, dextrin, gum arabic, carrageenan, alginic acid, guar gum, xanthan gum, hydroxyalkyl cellulose, alkyl cellulose, carboxyalkyl cellulose, tamarind seed gum, locust bean gum, tara gum, karaya gum, succinoglycan, pullulan, and derivatives thereof. These polysaccharides may be used singly or in combination of two or more thereof. Among these, from the viewpoint of further increasing the stress and elongation of the resulting molded article, the polysaccharide is preferably at least one selected from the group consisting of carrageenan, alginic acid, guar gum, xanthan gum, hydroxyalkyl cellulose, alkyl cellulose, tamarind seed gum, locust bean gum, tara gum, pullulan, and derivatives thereof, more preferably at least one selected from the group consisting of carrageenan, alginic acid, guar gum, xanthan gum, hydroxyalkyl cellulose, alkyl cellulose, tamarind seed gum, locust bean gum, tara gum, and derivatives thereof, and most preferably at least one selected from the group consisting of carrageenan and derivatives thereof.

Carrageenan is a polysaccharide obtained from red algae, has repeating units of D-galactose or 3,6-anhydro-D-galactose, and also has a sulfate group. Carrageenan is classified into κ (kappa) carrageenan, 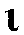 (iota) carrageenan, and λ (lambda) carrageenan. These can be used singly or in combination of two or more. As carrageenan, for example, commercially available products such as "GENUGEL carrageenan type JPE-126" (manufactured by Sansho Co., Ltd.), "GENUTINE VCS-J" (manufactured by Sansho Co., Ltd.), "GENUVISCO CF02" (manufactured by Sansho Co., Ltd.), "SOAGEENA" series (purified carrageenan manufactured by Mitsubishi Chemical Corporation) such as "SOAGEENA MW210" and "SOAGEENA MV320", and "SOAACE" series (purified carrageenan formulation manufactured by Mitsubishi Chemical Corporation) such as "SOAACE MW-952" may be used.

Alginic acid is a polysaccharide obtained from brown algae or the like, and has a structure in which D-mannuronic acid and L-guluronic acid are randomly polymerized. As alginic acid, for example, commercially available products such as "KIMICA ACID G" and "KIMICA ACID SA" (manufactured by Kimica Corporation) may be used.

Guar gum is a polysaccharide obtained from the endosperm of *Cyamopsis tetragonoloba,* and has a structure in which mannose is a main chain and galactose is bonded as a side chain. As the guar gum, for example, commercially available products such as "Guar Pack (registered trademark)" (manufactured by MP Gokyo Food & Chemical Co., Ltd.), "RG100" (manufactured by Mitsubishi Chemical Corporation), "JAGUAR C 17K" (cationized guar gum manufactured by Sansho Co., Ltd.), and "MEYPRO-BOND 111" (cationized guar gum manufactured by Sansho Co., Ltd.) may be used.

Xanthan gum is a polysaccharide produced by fermenting starch by the bacterium *Xanthomonas campestris,* and has glucose as a main chain and a side chain including one glucuronic acid between two mannoses. As the xanthan gum, for example, commercially available products such as "Echo Gum (registered trademark)" (manufactured by MP Gokyo Food & Chemical Co., Ltd.) and "SOAXAN XG800" (manufactured by Mitsubishi Chemical Corporation) may be used.

Examples of the hydroxyalkyl cellulose include hydroxyalkyl celluloses having a hydroxyalkyl group having 2 to 10 carbon atoms, such as hydroxyethyl cellulose, hydroxypropyl cellulose, hydroxypropyl methyl cellulose, and hydroxyethyl methyl cellulose. Preferred examples of the hydroxyalkyl cellulose include hydroxyalkyl celluloses having a hydroxyalkyl group having 2 to 6 carbon atoms. Examples of the alkyl cellulose include alkyl celluloses having an alkyl group having 2 to 10 carbon atoms, such as methyl cellulose, ethyl cellulose, propyl cellulose, and butyl cellulose, and alkyl celluloses having an alkyl group having 2 to 6 carbon atoms. The hydroxyalkyl cellulose indicates cellulose in which one or more hydroxyl groups are modified with a hydroxyalkyl group, and the alkyl cellulose indicates cellulose in which one or more hydroxyl groups are modified with an alkyl group. The number of carbon atoms of the hydroxyalkyl group and the number of carbon atoms of the alkyl group indicate the number of carbon atoms of one hydroxyalkyl group and the number of carbon atoms of one alkyl group, respectively.

Tamarind seed gum is a polysaccharide obtained from seeds of *Tamarindus indica,* and has a structure in which glucose is a main chain, and xylose and galactose are bonded as a side chain. As the tamarind seed gum, for example, commercially available products such as "GLYLOID (registered trademark) 6C", "GLYLOID (registered trademark) 3S", "GLYLOID (registered trademark) 2A", "GLYATE (registered trademark)" (manufactured by MP Gokyo Food & Chemical Co., Ltd.), and "TG120" (manufactured by Mitsubishi Chemical Corporation) may be used.

Locust bean gum is a polysaccharide obtained from seeds of *Celatonia siliqua,* and has a structure in which mannose is a main chain and galactose is bonded as a side chain. As the locust bean gum, for example, commercially available products such as "GENU (registered trademark) GUM type RL-200Z" (manufactured by Sansho Co., Ltd.), "SOALOCUST A200", "SOALOCUST A120", and "MC1000" (manufactured by Mitsubishi Chemical Corporation) may be used.

Tara gum is a polysaccharide obtained from seeds of *Caesalpinia spinosa,* and has a structure in which mannose is a main chain and galactose is bonded as a side chain. As the tara gum, for example, commercially available products such as "MT120" and "MT1000" (manufactured by Mitsubishi Chemical Corporation) may be used.

Examples of the derivatives of polysaccharides include sodium salts, potassium salts, calcium salts, cationized forms and salts thereof, anionized forms and salts thereof, and acid hydrolysates. The polysaccharide may be used singly or in combination of two or more thereof.

In an embodiment of the present invention, the number average molecular weight (may be referred to as Mn) of the polysaccharide is preferably 5 k to 50,000 kDa, more preferably 10 k to 10,000 kDa, and still more preferably 10 k to 5,000 kDa, and may be, for example, 5 k to 1000 kDa, 10 k to 500 kDa, or 15 to 200 kDa. The weight average molecular weight (may be referred to as Mw) of the polysaccharide is preferably 5 k to 150,000 kDa, more preferably 10 k to 50,000 kDa, and still more preferably 10 k to 30,000 kDa, and may be, for example, 10 k to 5,000 kDa, 30k to 2,000 kDa, or 50 k to 1,000 kDa. When the Mn and/or Mw of the polysaccharide is within the range, the stress and elongation of the resulting molded article can be further enhanced. When two or more polysaccharides are contained, the Mn of the polysaccharide is a weighted average of the Mn of the two or more polysaccharides. The same applies to Mw.

The content of the polysaccharide is preferably 0 to 40 mass%, more preferably 0.1 to 35 mass%, still more preferably 1 to 30 mass%, still even more preferably 5 to 28 mass%, still even more preferably 10 to 28 mass%, still even more preferably 15 to 28 mass%, still even more preferably 20 to 28 mass%, and particularly preferably 20 to 25 mass% with respect to the mass of the composition. When the content of the polysaccharide is within the range, the resulting molded article can have excellent stress and elongation.

In addition, the content of at least one selected from the group consisting of carrageenan, alginic acid, guar gum, xanthan gum, hydroxyalkyl cellulose, alkyl cellulose, tamarind seed gum, locust bean gum, tara gum and derivatives thereof, which are more preferred polysaccharides, is preferably 0 to 40 mass%, more preferably 0.1 to 35 mass%, still more preferably 1 to 30 mass%, still even more preferably 5 to 28 mass%, still even more preferably 10 to 28 mass%, still even more preferably 13 to 25 mass%, and particularly preferably 15 to 22 mass% with respect to the mass of the composition. When the content of the polysaccharide is within the range, the resulting molded article can have excellent stress and elongation.

### <Additive>

In the composition of the present invention, the composition may contain an additive other than the starch, the plasticizer, and the polysaccharide described above as long as the effects of the present invention are not hindered. Examples of the additive include a dispersant, moisture, an antioxidant, an ultraviolet absorber, a lubricant, a colorant, an antiseptic, a filler, a surfactant, an anti-stick agent, a release agent, a dye, and a crosslinking agent. The additive may be used singly or in combination of two or more thereof.

Examples of the filler include inorganic pigments such as kaolin, clay, engineered kaolin, delaminated clay, heavy calcium carbonate, light calcium carbonate, micas (swellable mica, synthetic mica, muscovite, sericite, phlogopite, biotite, fluorophlogopite (artificial mica), red mica, soda mica, vanadium mica, illite, tin mica, paragonite, brittle mica, and the like), talc, titanium dioxide, barium sulfate, calcium sulfate, zinc oxide, silicic acid, silicate, bentonite (montmorillonite, beidellite, saponite, stevensite, hectorite, and the like), colloidal silica, and satin white, and organic pigments such as a solid type, a hollow type, and a core-shell type. The filler may be used singly or in combination of two or more thereof.

When the composition of the present invention contains a filler, the total content of the filler is preferably 0.1 to 50 mass%, more preferably 0.5 to 35 mass%, still more preferably 1 to 30 mass%, still even more preferably 1.5 to 20 mass%, still even more preferably 2 to 18 mass%, still even more preferably 2 to 15 mass%, still even more preferably 2 to 10 mass%, and particularly preferably 2 to 6 mass% with respect to the mass of the composition of the present invention from the viewpoint of improving the stress of the resulting molded article. From the viewpoint of increasing the thickness of the coating film, the total content of the filler is preferably 1 to 90 mass%, more preferably 5 to 80 mass%, still more preferably 10 to 75 mass%, still even more preferably 20 to 70 mass%, still even more preferably 30 to 65 mass%, still even more preferably 40 to 60 mass%, still even more preferably 42 to 58 mass%, and particularly preferably 45 to 55 mass%.

In addition, a dispersant may be separately added to a coating agent for producing a water-soluble film or the like from the composition. By adding the dispersant, the dispersibility of the filler can be improved.

The dispersant is preferably a cationic polymer, and examples thereof include a polyalkylene polyamine, a polyamide compound, a polyamidoamine-epihalohydrin or a formaldehyde condensation reaction product, a polyamine-epihalohydrin or a formaldehyde condensation reaction product, a polyamide polyurea-epihalohydrin or a formaldehyde condensation reaction product, a polyamine polyurea-epihalohydrin or a formaldehyde condensation reaction product, a polyamide amine polyurea-epihalohydrin or a formaldehyde condensation reaction product, a polyamide polyurea compound, a polyamine polyurea compound, a polyamide amine polyurea compound and a polyamide amine compound, polyethyleneimine, polyvinylpyridine, an aminomodified acrylamide compound, polyvinylamine, polydiallyldimethylammonium chloride, and a modified polyvinyl alcohol. The dispersant may be used singly or in combination of two or more thereof.

When the composition of the present invention contains a dispersant, the content of the dispersant is preferably 0.01 to 20 mass%, more preferably 0.1 to 10 mass%, and still more preferably 1 to 5 mass% with respect to the total amount of the composition.

Examples of the crosslinking agent include tannic acid and a salt thereof, tannin other than tannic acid, catechin, anthocyanin, gallic acid and a salt thereof, phenols, hydroquinone, and phosphoric acid.

The content of the additive is not particularly limited as long as the effects of the present invention are not hindered, but is, for example, about 0 to 10 mass%, preferably 0.001 to 10 mass%, more preferably 0.01 to 5 mass%, and still more preferably 0.1 to 1 mass% with respect to the mass of the composition.

In an embodiment of the present invention, in the composition of the present invention, the content of the polyvinyl alcohol-based resin in the composition is preferably less than 30 mass%, more preferably 20 mass% or less, still more preferably 10 mass% or less, still even more preferably 5 mass% or less, particularly preferably 1 mass% or less, and particularly more preferably 0.1 mass% or less, and may be 0 mass%. That is, the content of the polyvinyl alcohol-based resin in the composition is preferably less than 0 to 30 mass%, more preferably 0 to 20 mass%, still more preferably 0 to 10 mass%, still even more preferably 0 to 5 mass%, particularly preferably 0 to 1 mass%, and particularly more preferably 0 to 0.1 mass%. When the content of the polyvinyl alcohol-based resin in the composition is the upper limit or less, the stress, toughness, water solubility, and biodegradability of a molded article obtained from the composition can be enhanced.

### [Molded article]

The present invention includes a molded article containing the composition of the present invention. In the present invention, the molded article is not particularly limited, and a form according to a desired use can be appropriately taken. The molded article may be in the form of, for example, a water-soluble film, a fiber, a sheet, a rod, spherical particles, or a porous material, and is preferably a water-soluble film or a fiber.

The molded article of the present invention preferably has a maximum stress of 4 MPa or more, and/or a toughness of 440 or more. When the maximum stress and/or the toughness of the molded article of the present invention is the lower limit or more, it means that the molded article is excellent in mechanical strength, leading to excellent mechanical strength of a pouch containing the molded article, which will be described later.

The maximum stress of the molded article is preferably 4 to 100 MPa, more preferably 6 to 100 MPa, still more preferably 7 to 100 MPa, still even more preferably 9 to 99 MPa, particularly preferably 11 to 95 MPa, more particularly preferably 12.5 to 90 MPa, and extremely preferably 13 to 90 MPa, and may be, for example, 16 to 90 MPa, 17 to 88 MPa, 18 to 88 MPa, 23 to 85 MPa, more than 26 MPa and 80 MPa or less, 30 to 80 MPa, 35 to 79 MPa, 40 to 78 MPa, or 45 to 78 MPa. When the stress of the molded article is within the range, the molded article is excellent in moldability and durability, and for example, when the molded article is a film, wrinkles are hardly generated, and handleability is also excellent.

The toughness of the molded article is preferably 400 to 3000, more preferably 510 to 3000, still more preferably 550 to 3000, still even more preferably 580 to 2900, particularly preferably 620 to 2900, particularly more preferably 780 to 2900, and extremely preferably 860 to 2900, and may be, for example, 880 to 2800, 930 to 2800, 940 to 2800, 960 to 2800, 1070 to 2800, 1120 to 2800, 1210 to 2700, 1330 to 2700, 1370 to 2700, 1450 to 2600, 1460 to 2600, 1490 to 2600, 1710 to 2500, or 1720 to 2500. When the toughness of the molded article is within the range, the molded article is excellent in moldability and durability, and for example, when the molded article is a film, cracks are hardly generated. The toughness of the molded article can be determined by the maximum stress × the elongation at break described later in the tensile test.

The elongation at break of the molded article is preferably 10% or more, more preferably 12 to 250%, still more preferably 21 to 250%, still even more preferably 25 to 250%, particularly preferably 50 to 250%, particularly more preferably 56 to 240%, and for example, 60 to 240%, 70 to 240%, 80 to 240%, 105 to 230%, 110 to 230%, 120 to 230%, 130 to 230%, 135 to 230%, 140 to 220%, 160 to 220% or 185 to 210%. When the elongation at break of the molded article is within the range, moldability and durability are excellent, and for example, when the molded article is a film, secondary processability into a pouch or the like is excellent. The maximum stress and the elongation at break of the molded article can be determined by a tensile test, and for example, can be determined by the method described in Examples described later.

The molded article of the present invention is preferably water-soluble. In the present invention, "water-soluble" means that it can be dissolved in water, and preferably means that the solubility in hot water at 90°C is 90 mass% or more. That is, when a molded article is put into hot water at 90°C, the molded article is dissolved therein by stirring for 5 minutes, and then the amount of the solid content which does not pass through a filter (pore size: 21 µm) is 10 mass% or less, the molded article can be evaluated as being water-soluble. The mass of the molded article to be dissolved in hot water at 90°C is 0.1 parts by mass per 100 parts by mass of hot water at 90°C. The solubility of the molded article in hot water at 90°C is 90 to 100 mass%, preferably 95 to 100 mass%, and more preferably 98 to 100 mass%.

In an embodiment of the present invention, the molded article is preferably a non-food product or an edible packaging material. The non-food product refers to an article that is not edible. The edible packaging material refers to a packaging material for eating or a packaging material that can be eaten. The edible packaging material includes, for example, edible films and pouches (a pouch that is sealed in the interior, or a pouch that is partially open, for example, a cup, a tube, a tray, a bottle, a box, a lid, or a container). The object to be packaged in the edible packaging material is preferably one that can be eaten or ingested. Examples thereof include foods including a drink such as water or juice, medicines, supplements, or food additives including a seasoning. When the molded article is a water-soluble edible packaging material, the moisture content of the object to be packaged is preferably 20 mass% or less, and more preferably 5 mass% or less from the viewpoint of stable packaging before eating or ingestion.

### (Water-soluble film)

The molded article of the present invention may be, for example, a water-soluble film. Therefore, it means that the water-soluble film is preferably a film having a solubility of 90 mass% or more in hot water at 90°C.

In an embodiment of the present invention, the water-soluble film can be dissolved in water at 10°C preferably within 1000 seconds. That is, when a water-soluble film having a length of 30 mm × a width of 40 mm × a thickness of 50 µm is immersed in 500 mL of water at 10°C, the time taken for the water-soluble film to be completely dissolved is preferably within 1000 seconds, more preferably 700 seconds or less, still more preferably within 600 seconds, and still even more preferably within 500 seconds, and may be, for example, within 300 seconds or within 180 seconds. When the complete dissolution time of the water-soluble film in water at 10°C is the upper limit or less, the contents are quickly released particularly when a pouch containing the film is dissolved in cold water for use. In addition, residues are less likely to remain. The lower limit of the complete dissolution time is not particularly limited, and the shorter the time required for complete dissolution, the better. The complete dissolution time of the water-soluble film in water at 10°C can be adjusted to the upper limit or less by appropriately adjusting, for example, the type and/or amount of components contained in the water-soluble film; production conditions of the water-soluble film (drying conditions and the like) and the like. The complete dissolution time in water at 10°C can be calculated as, for example, the time taken for a water-soluble film of 30 mm × 40 mm to be completely dissolved after being immersed in 500 ml of distilled water at 10°C under stirring.

The film thickness of the water-soluble film is preferably 1 to 500 µm, more preferably 5 to 300 µm, and still more preferably 10 to 100 µm. When the film thickness of the water-soluble film is within the range, the mechanical strength (for example, compressive strength and the like) and water solubility of the pouch containing the water-soluble film can be further enhanced. The film thickness of the water-soluble film can be determined using, for example, a film thickness meter.

In an embodiment of the present invention, the water-soluble film has excellent homogeneity without bleeding out of the plasticizer. The surface of the water-soluble film may be flat, and from the viewpoint of preventing sticking of products, one surface or both surfaces of the water-soluble film may be subjected to embossing processing such as applying an embossing pattern or an uneven pattern. For such embossing processing, publicly-known methods in the art can be adopted.

### (Method for producing water-soluble film)

The method for producing the water-soluble film of the present invention is not particularly limited, and the water-soluble film can be produced by a publicly-known method in the art.

The water-soluble film can be produced by, for example, a method including:
(1) a step of stirring a starch, a plasticizer, and a solvent, and optionally a polysaccharide and/or the additive at a predetermined temperature to obtain a coating liquid (coating agent);
(2) forming a coating film; and
(3) drying the coating film to form a dry coating film.

The solid content concentration of the coating liquid is preferably 1 to 15 mass%, and more preferably 2 to 10 mass%. The solid content concentration indicates the total mass of components other than the solvent (for example, starch, plasticizer, polysaccharide, and additive) with respect to the mass of the coating liquid.

The temperature at which the starch and the plasticizer, and optionally the polysaccharide and/or the additive, and the solvent are stirred is usually 30 to 100°C, and preferably 40 to 98°C. The stirring method is not particularly limited, and stirring can be performed by a conventionally publicly-known method.

The solvent is not particularly limited, but water, ethanol, methanol, 1-propanol, 2-propanol, and the like are preferable because the starch and the plasticizer are easily dissolved therein, and subsequent drying is easy.

The coating film can be formed by, for example, applying the coating liquid onto a substrate.

Examples of the substrate include films of polyolefins such as polyethylene, polypropylene, and a norbornene-based polymer, polyesters such as polyethylene terephthalate, polyamides such as nylon 6 and nylon 66, fluororesins such as polytetrafluoroethylene, polyvinyl alcohol, poly(meth)acrylic acid esters, cellulose esters such as triacetyl cellulose, diacetyl cellulose, and cellulose acetate propionate, polylactic acid, and an ethylene-vinyl alcohol copolymer, and the like; papers such as kraft paper, machine glazed kraft paper, machine glazed bleached kraft paper, bleached kraft paper, unbleached kraft paper, woodfree paper, ordinary grade paper, coated paper, machine glazed paper, imitation Japanese vellum, glassine paper, graphan paper (highly transparent glassine paper), parchment paper, synthetic paper, white cardboard, Manila board, milk carton base paper, cup base paper, ivory board, hakugin paper (pure white paper), thin paper, paperboard, rayon paper, wax paper, and liner paper, and a metal plate.

The paper can be generally produced by making a paper stock containing pulp, a filler, and various aids into paper.

Examples of the pulp include leaf-tree bleached kraft pulp (LBKP), needle-tree bleached kraft pulp (NBKP), leaf-tree unbleached kraft pulp (LUKP), needle-tree unbleached kraft pulp (NUKP), and chemical pulps such as sulfite pulp; mechanical pulps such as stone ground pulp and thermomechanical pulp; wood fibers such as deinked pulp and waste paper pulp; and non-wood fibers obtained from kenaf, bamboo, hemp, and the like. These can be used singly or in combination of two or more. Among these, from the viewpoint of being able to reduce the possibility of contamination of base paper with foreign substances and the possibility of discoloration over time when recycled after use, and being able to realize good printing due to high whiteness and increase the value of use (particularly when used as a packaging material), it is preferable to use chemical pulp and mechanical pulp of wood fibers, and it is more preferable to use chemical pulp.

Materials other than pulp can also be blended as the subsidiary paper material as long as the effects of the present invention are not impaired. Examples of such materials include synthetic fibers such as rayon fibers and nylon fibers.

Examples of the filler include white carbon, talc, kaolin, clay, heavy calcium carbonate, light calcium carbonate, titanium oxide, zeolite, and a synthetic resin filler. These can be used singly or in combination of two or more.

Examples of the various aids include aluminum sulfate, various anionic, cationic, nonionic or amphoteric yield improvers, drainage improvers, paper strength enhancers, and internal sizing agents, and these can be used singly or in combination of two or more thereof. Optionally, dyes, optical brighteners, pH adjusters, defoamers, pitch control agents, slime control agents, and additives of two or more thereof can also be used.

The method for producing paper is not particularly limited, and for example, paper can be produced according to the following procedure.

First, a pulp slurry, a filler, and various aids are mixed to prepare a paper stock. The pulp slurry can be prepared by beating pulp in the presence of water. The pulp beating method and beating apparatus are not particularly limited, and publicly-known beating methods and beating apparatuses can be employed. The content of the pulp in the paper stock is not particularly limited. For example, the content of the pulp is 60 mass% or more and less than 100 mass% with respect to the total mass of the paper stock.

Next, the prepared paper stock is subjected to acidic papermaking, neutral papermaking, or alkali papermaking using a publicly-known Fourdrinier former, an ontop hybrid former, a gap former machine, or the like. A plurality of sheets of wet paper obtained after dehydration are layered as necessary, and one or two or more sheets of wet paper are pressed and dried to obtain paper. At this time, when a plurality of sheets of wet paper are not layered, a single-layer paper is obtained, and when a plurality of sheets of wet paper are layered, a multi-layer paper is obtained. When a plurality of sheets of wet paper are layered, an adhesive may be applied to the surface of the wet paper (the surface on which another sheet of wet paper is layered).

The surface of the paper may be treated with various chemicals. Examples of the chemical that can be used include oxidized starch, hydroxyethyl etherified starch, enzyme-modified starch, polyacrylamide, polyvinyl alcohol, a surface sizing agent, a water-resistant agent, a humectant, a thickener, and a lubricant. These can be used singly or in combination of two or more. Further, these various chemicals and pigments may be used in combination. Examples of the pigment include inorganic pigments such as kaolin, clay, engineered kaolin, delaminated clay, heavy calcium carbonate, light calcium carbonate, mica, talc, titanium dioxide, barium sulfate, calcium sulfate, zinc oxide, silicic acid, silicate, colloidal silica, and satin white, and organic pigments such as a solid type, a hollow type, and a core-shell type, and these can be used singly or in combination of two or more.

The method of treating the surface of paper is not particularly limited. For example, the treatment can be performed using a publicly-known coating apparatus such as a rod-metering size press, a pond size press, a gate roll coater, a spray coater, a blade coater, or a curtain coater.

Examples of the method for applying the coating liquid to the substrate or the like include publicly-known methods such as a spin coating method, an extrusion method, a bar coating method, and an applicator method. As the coater, a blade coater, a bar coater, a roll coater, a gravure coater, a reverse gravure coater, a comma coater, an air knife coater, a reverse roll coater, a curtain coater, a spray coater, a size press coater, a gate roll coater, or the like can be used.

Subsequently, the solvent is removed by drying or the like to form a dry coating film. Examples of the drying method include a natural drying method, a forced-air drying method, a heat drying method, and a reduced-pressure drying method. As the dryer, a conventional dryer can be used, and examples thereof include a steam heater, a gas heater, an infrared heater, an electric heater, a hot air heater, a microwave, and a cylinder dryer.

Alternatively, a water-soluble film can also be produced by a melt extrusion film formation method, an inflation molding method or the like, in which a film is formed by extruding a film formation stock solution (for example, a water-soluble film forming material) obtained using an extruder or the like from a T-die or the like.

A molded article (for example, a water-soluble film) can be obtained by forming a water-soluble film on a substrate and then removing the substrate. Further, the substrate may be used as it is without being peeled off. When the substrate is not peeled off, a laminate including the substrate (support) and the molded article (for example, a water-soluble film) can be obtained. When the substrate is peeled off, it is preferable that a release agent is applied to the application surface.

### (Pouch)

The present invention also includes a pouch containing the molded article of the present invention, preferably a molded article which is a water-soluble film.

The pouch of the present invention includes the molded article, and thus can exhibit properties similar to those of the molded article described above. That is, the pouch of the present invention is excellent in mechanical strength and water solubility.

The molded article (preferably, a water-soluble film) included in the pouch may be a single layer or a multilayer. When the pouch includes a multilayer molded article (or is composed of a multilayer molded article), the multilayer molded article may be a laminate of a plurality of the molded articles, or may be a laminate of the molded article and another molded article other than the molded article. From the viewpoint of enhancing the mechanical strength and water solubility of the pouch, the pouch is preferably formed of a single layer or a multilayer of the molded article. From the viewpoint of production efficiency, the pouch is more preferably formed of a single layer of the molded article.

The pouch of the present invention has excellent mechanical strength, and the compressive strength thereof is preferably 50 N or more, more preferably 100 N or more, still more preferably 200 N or more, still even more preferably 300 N or more, and particularly preferably 400 N or more, and may be, for example, 500 N, 600 N, 700 N, or 800 N or more. The upper limit of the compressive strength of the pouch is usually 2000 N or less, and preferably 1000 N or less. That is, a preferable range is 50 to 2000 N, 100 to 2000 N, 200 to 2000 N, 300 to 2000 N, 400 to 2000 N, 500 to 2000 N, 600 to 2000 N, 700 to 2000 N, or 800 to 1000 N. The compressive strength of the pouch can be adjusted to the lower limit or more by appropriately adjusting, for example, the type and/or amount of components in the composition contained in the molded article constituting the pouch; production conditions of the molded article (for example, drying temperature and solution concentration during film formation by coating of the aqueous solution); production conditions of the pouch (for example, the amount of water applied, temperature, and pressure during water seal, and the temperature and pressure during heat seal) and the like.

The pouch is not particularly limited as long as it can package a substance (preferably the contents), and may be a pouch which is sealed in the interior or a pouch which is partially opened. Although not limited, the pouch may be in the form of, for example, a two-side seal pouch, a three-side seal pouch, a flat pouch, a standing pouch, a gusset pouch, a bottom gusset pouch, a twin pouch, a spout pouch, a side seal pouch, a bottom seal pouch, or the like, or may be in the form of a container, a cup, or the like. In an embodiment of the present invention, the pouch may be a pouch which is partially opened, but is preferably a pouch which is sealed in the interior. In such an embodiment, it is more preferable that the pouch includes contents therein, and the inside thereof is sealed.

### (Method for producing pouch)

The method for producing the pouch of the present invention from the molded article is not particularly limited, and the pouch can be produced by a publicly-known method in the art.

The pouch of the present invention can be produced, for example, by a method including a step of sealing one or more molded articles into a bag shape. Further, the pouch including the contents therein can be produced, for example, by a method including a step of charging the contents into a bag-shaped molded article, and a step of sealing the pouch opening; a step of forming a recess in a first molded article, a step of charging the contents into the recess, a step of sealing the first molded article and a second molded article together, and the like.

Examples of the method of sealing the molded article include a method of performing sealing by applying water to the surface of the molded article and bonding the applied surface (also referred to as water seal), a method of performing sealing by thermocompression bonding (also referred to as heat seal), and a method of performing sealing with a pressure-sensitive adhesive.

Water seal is preferable from the viewpoint that the molded article undergoes less thermal degradation.

In an embodiment of the present invention, since the molded article has high adhesive strength due to moisture, water seal can be suitably used. In another embodiment of the present invention, the molded article has high water sealability and low heat sealability. Due to the low heat sealability, the film is less likely to adhere to rolls when a molded article in the form of a film is produced by a roll-to-roll process, and damage during production can be effectively suppressed. Further, since the molded article has high water sealability, the produced molded article can be easily formed into a pouch by moisture.

### (Applications of pouch)

The pouch of the present invention is excellent in mechanical strength and water solubility, and thus can be suitably used particularly for applications in which the pouch is used by being dissolved in water. Therefore, the pouch of the present invention preferably contains at least one selected from the group consisting of a cleaning agent, a softener, and a perfume therein. The physical properties of the contents are not particularly limited, and the contents may be acidic, neutral, or alkaline. The form of the contents may be any of a powder form, a lump form, a gel form, and a liquid form.

### (Fiber)

The molded article of the present invention may be, for example, a fiber. Therefore, the fiber may preferably have a solubility of 90 mass% or more in hot water at 90°C.

In an embodiment of the present invention, the fiber can be dissolved in water at 10°C preferably within 1000 seconds. That is, when 5 cm of fiber is immersed in 500 mL of water at 10°C, the time taken for the fiber to be completely dissolved is preferably within 1000 seconds, more preferably 700 seconds or less, still more preferably within 600 seconds, and still even more preferably within 500 seconds, and may be, for example, within 300 seconds or within 180 seconds. When the complete dissolution time of the fiber in water at 10°C is the upper limit or less, the fiber structure (for example, nonwoven fabric, woven fabric, and knitted fabric) containing the fiber can be suppressed from remaining undissolved particularly when the fiber structure is dissolved in cold water for use. The lower limit of the complete dissolution time is not particularly limited, and the shorter the time required for complete dissolution, the better. The complete dissolution time of the fiber in water at 10°C can be adjusted to the upper limit or less by appropriately adjusting, for example, the type and/or amount of the components contained in the fiber; production conditions of the fiber (drying temperature, residual moisture amount, drawing temperature, drawing ratio, and the like) and the like.

The single yarn fineness of the fiber of the present invention is preferably 0.01 to 10,000 dtex, more preferably 0.3 to 5000 dtex, and still more preferably 1 to 10 dtex. When the single yarn fineness is within the range, strength and texture are excellent. The single yarn fineness can be adjusted to be within the range by appropriately adjusting, for example, the size of the spinneret; drawing ratio; drawing speed and the like during spinning. The single yarn fineness can be calculated from a value obtained by measuring the total fineness of fibers in accordance with JIS L 1013 and dividing the total fineness by the number of filaments.

The total fineness of the fibers of the present invention is preferably 10 to 100000 dtex, more preferably 100 to 10000 dtex, and still more preferably 1000 to 5000 dtex. When the total fineness is the upper limit or less, the handleability of the fiber is excellent. The total fineness can be adjusted to be within the range by appropriately adjusting, for example, the single yarn fineness during spinning; the number of filaments and the like. The total fineness can be determined in accordance with JIS L 1013.

The cross-sectional shape of the fiber of the present invention is not particularly limited, and can be, for example, a round shape, an elliptical shape, a flower shape, a leaf shape, a polygon shape, a star shape, a Y shape, a snowman shape, a hollow shape, or a cross shape.

### (Method for producing fibers)

The method for producing the fibers of the present invention is not particularly limited, and may be any of melt spinning, dry spinning, and wet spinning, and the fibers can be produced by a publicly-known method in the art. In a preferred embodiment, the fibers of the present invention are preferably produced by dry spinning, and can be produced by, for example, a method including:
a step of obtaining threads from the composition by dry spinning; and
a step of drawing the obtained threads.

As the volatile solvent used in the spinning dope containing the composition of the present invention in dry spinning, those conventionally used in dry spinning can be used. Examples of the volatile solvent include water, dimethyl sulfoxide (DMSO), dimethylformamide, dimethylacetamide, and N-methylpyrrolidone. These can be used singly or in combination of two or more thereof. The concentration of the composition of the present invention in the spinning dope may be appropriately adjusted depending on the composition of the composition and the solvent to be used, and is, for example, about 5 to 85 mass%. The spinning dope is usually discharged from a publicly-known dry spinning machine into a heated gas (inert gas such as helium, argon, or nitrogen) or air, and the solvent is volatilized to obtain a solidified yarn (thread). The cross-sectional shape and diameter of the obtained fiber can be arbitrarily set depending on the shape and size of the spinneret through which the spinning dope is discharged. In this step, the starch, the plasticizer and the volatile solvent, and optionally the polysaccharide and/or the additive and the like may be mixed in the dry spinning machine.

The spinning dope may be heated in advance, and the temperature thereof is preferably 20 to 200°C and more preferably 80 to 150°C. When the temperature of the spinning dope is within the range, the spinnability can be stabilized.

Drawing includes a case where the solidified yarn is wound once and then drawn, and a case where the solidified yarn is subsequently drawn after solidifying. The drawing may be performed by any method in the fiber of the present invention. The drawing operation is usually performed by thermal drawing, and may be performed using any of hot air, a hot plate, atmospheric heating, a hot roller, and the like. The temperature during the thermal drawing is preferably 100 to 300°C, and more preferably 200 to 250°C.

The drawn fibers are preferably wound at 100 to 10,000 m/min, and more preferably 500 to 2000 m/min. When the winding speed is within the range, stable spinnability can be realized.

In the present invention, after spinning, any processing may be performed as long as the fiber properties (stress, toughness, water solubility, and the like) are not deteriorated. Examples of such processing include processing of applying an oil agent after drawing to prevent sticking and convergence processing by interlacing, false twist texturing processing, Taslan processing, crimp processing, mercerization processing, shrink-proof processing, crease-proof processing, dye-proof processing, bulky processing, softening processing, antibacterial processing, and the like.

The fibers of the present invention may be in the form of continuous fibers (monofilament, multifilament), short fibers, yarns, strings, ropes, and the like. The fibers of the present invention may also be in the form of a fabric such as a woven fabric, a knitted fabric, or a nonwoven fabric containing the fibers of the present invention. These forms may be composed of only the fibers of the present invention, or may be composed in combination with fibers other than the fibers of the present invention. In an embodiment, the form of a nonwoven fabric is preferred.

The fibers of the present invention are a molded article containing the composition of the present invention, and thus are excellent in stress, toughness and water solubility. In addition, the fibers of the present invention are excellent in texture and air permeability.

### [Coated article (laminate)]

The present invention also includes a coated article including a substrate coated with the composition of the present invention. That is, the coated article is a laminate including a layer formed of the composition of the present invention and a substrate layer. Since the coated article of the present invention is coated with the composition of the present invention containing starch, the coated article can have high mechanical strength and excellent gas barrier properties. The layer formed of the composition of the present invention may preferably be a water-soluble film. In the coated article, the layer formed of the composition of the present invention may be a single layer or a multilayer. When the layer is a multilayer, the respective layers may be the same or different from one another. The coated article may include any other layer. The coated article may have one or more layers selected from the group consisting of a barrier layer, a protective layer, and a heat seal layer as an optional layer at any position in the layer configuration. When the laminate has a protective layer and/or a heat seal layer, the layer is preferably disposed on the outermost layer of the laminate.

The substrate that can be used for the coated article of the present invention is not particularly limited, and examples thereof include papers (kraft paper, machine glazed kraft paper, machine glazed bleached kraft paper, bleached kraft paper, unbleached kraft paper, woodfree paper, ordinary grade paper, coated paper, machine glazed paper, imitation Japanese vellum, glassine paper, graphan paper (highly transparent glassine paper), parchment paper, synthetic paper, white cardboard, Manila board, milk carton base paper, cup base paper, ivory board, hakugin paper (pure white paper), thin paper, paperboard, rayon paper, wax paper, and liner paper, and the like), films (polyolefin films of polyethylene, polypropylene, a norbornene-based polymer, and the like; a polyvinyl alcohol film; a polyethylene terephthalate (PET) film; a poly(meth)acrylic acid ester film; cellulose ester films of triacetyl cellulose, diacetyl cellulose, cellulose acetate propionate, and the like; a polylactic acid film; an ethylene-vinyl alcohol copolymer film, and the like), and sheets. The thickness of the substrate is not particularly limited, and may be appropriately changed according to the application, and is, for example, about 1 to 500 µm or 10 to 300 µm.

When the substrate is paper, the basis weight of the paper is preferably 20 to 400 g/m² and more preferably 25 to 150 g/m² from the viewpoint of being suitable for packaging applications. The basis weight of the paper is more preferably 30 to 100 g/m² and still more preferably 40 to 70 g/m² from the viewpoint of being suitable for soft packaging material applications described later. The basis weight of the paper is measured in accordance with JIS P 8124:2011. The paper can be produced by the production method described above. Materials other than pulp can also be blended as the subsidiary paper material as long as the effects of the present invention are not impaired. Examples of such materials include synthetic fibers such as rayon fibers and nylon fibers.

When the substrate is a film, examples of the film include films (polyolefin films of polyethylene, polypropylene, a norbornene-based polymer, and the like; a polyvinyl alcohol film; a polyethylene terephthalate (PET) film; a poly(meth)acrylic acid ester film; cellulose ester films of triacetyl cellulose, diacetyl cellulose, cellulose acetate propionate, and the like; a polylactic acid film; an ethylene-vinyl alcohol copolymer film, and the like) and sheets.

The thickness of the composition in the coated article of the present invention is preferably 1 to 500 µm, more preferably 5 to 100 µm, and still more preferably 10 to 50 µm. When the thickness of the composition in the coated article is within the range, the mechanical strength and gas barrier properties of the coated article can be further enhanced.

The average thickness of the paper or the film as a substrate in the coated article of the present invention is, for example, about 1 to 500 µm or 10 to 300 µm.

The method for producing the coated article of the present invention is not particularly limited as long as it is a method capable of coating the substrate with the composition. The method can be, for example, a conventional method such as a spin coating method, an extrusion method, a gravure coating method, a die coating method, a bar coating method, an applicator method, a spray coating method, and a dip method. As the coater, a blade coater, a bar coater, a roll coater, a gravure coater, a reverse gravure coater, a comma coater, an air knife coater, a reverse roll coater, a curtain coater, a spray coater, a size press coater, a gate roll coater, or the like can be used. The coated article of the present invention may be produced, for example, by integrating, with a substrate, a molded article (for example, a film) produced by a melt extrusion film formation method, an inflation molding method or the like in which a film is formed by extruding a film formation stock solution (for example, a water-soluble film forming material) obtained using an extruder or the like from a T-die or the like.

Since the coated article of the present invention includes a substrate coated with the composition of the present invention, the coated article has high mechanical strength and excellent gas barrier properties.

The coated article of the present invention can be produced, for example, by a method including the same steps as (1) to (3) described in the method for producing a water-soluble film. In the coated article, the coating film may be a single layer or a multilayer. It is also possible to produce a multilayer laminate including optional layers in an arbitrary lamination order by repeating coating of a coating liquid (coating agent) on a support and removal of a solvent.

The coated article of the present invention can also be produced, for example, by integrating, with a support, a water-soluble film produced by a melt extrusion film formation method, an inflation molding method or the like in which a film is formed by extruding a film formation stock solution (for example, a water-soluble film forming material) obtained using an extruder or the like from a T-die or the like. The method for integrating the water-soluble film and the support is not limited, and examples thereof include a method of integrating the water-soluble film and the support by applying water to the surface of the water-soluble film and bonding the applied surface to the support, a method of integrating the water-soluble film and the support by thermocompression bonding, a method of integrating the water-soluble film and the support via a pressure-sensitive adhesive or an adhesive, and an inflation method in which a water-soluble film forming material and a material for forming the support (film) are co-extruded.

In the case of integration by thermocompression bonding, the conditions may be appropriately selected according to the type of polysaccharide, and the type and amount of the plasticizer contained in the water-soluble film in the case of containing the plasticizer. For example, the water-soluble film and the support can be integrated by pressure bonding at a temperature of 100 to 200°C and a pressure of 0.1 to 30 MPa for 0.1 to 10 seconds.

When the water-soluble film and the support are integrated via a pressure-sensitive adhesive or an adhesive, such a pressure-sensitive adhesive or an adhesive is known in the art.

The coated article of the present invention can also be produced as a multilayer laminate by bonding a plurality of water-soluble films obtained by a melt extrusion film formation method, an inflation molding method, or the like to the support by a publicly-known method.

When the coated article includes a plurality of water-soluble films, the coated article may include a water-soluble film produced by coating in combination with a water-soluble film produced by a melt extrusion film formation method, an inflation molding method or the like.

### [Packaging material]

The present invention also includes a packaging material containing the molded article of the present invention.

Since the packaging material of the present invention includes the molded article, the packaging material can exhibit the same mechanical strength and water solubility as those of the molded article described above. That is, the packaging material of the present invention is excellent in mechanical strength and water solubility.

The packaging material is a material used for packaging, and may include a thin film, a thick film, or the like. The packaging material may be in the form of a container, a cup, a tube, a tray, a bottle, or the like. In an embodiment of the present invention, the packaging material may contain a substance, preferably at least one selected from the group consisting of a cleaning agent, a softener, and a perfume therein, similarly to the pouch described above.

### <Composition>

The present invention also includes a composition comprising a starch having an amylose content of 5 to 25 mass% or a derivative thereof, and a plasticizer, wherein a total amount of the starch having an amylose content of 5 to 25 mass% or the derivative thereof and the plasticizer is 50 mass% or more with respect to a total mass of the composition. Since the composition of the present invention in such an embodiment contains a starch having an amylose content of 5 to 25 mass% or a derivative thereof, the resulting molded article has excellent stress, toughness, and water solubility. The content of amylose in the starch of the molded article can be measured, for example, by the absorbance at a wavelength of 620 nm when iodine is adsorbed to the starch according to the method described in "the Ministry of Agriculture, Forestry and Fisheries Notification No. 332 Standard Measurement Method on March 14, 2001". When two or more starches are contained in the composition, the amylose content means an average amylose content, which is a weighted average value in consideration of the constituent ratios of the two or more starches.

The amylose content in the starch is preferably 5 to 23 mass%, more preferably 5 to 22 mass%, and still more preferably 6 to 21 mass%, and may be, for example, 7 to 20 mass%, 8 to 18 mass%, or 10 to 17 mass%. When the amylose content is within the range, the stress, toughness and water solubility of the resulting molded article can be further enhanced.

The present inventors have focused on the amylose content of starch, and found that a molded article containing a composition containing a starch having an amylose content of 5 to 25 mass% or a derivative thereof and a plasticizer is unexpectedly excellent in stress, toughness, and water solubility. The reason for this is not clear, but it is considered that when the amylose content is within the range, compatibility between amylose and amylopectin is improved, so that the stress, toughness and water solubility of the molded article are enhanced.

The water content in the starch having an amylose content of 5 to 25 mass% is preferably 1 to 20 mass% and more preferably 5 to 15 mass%. The water content in the starch can be determined by, for example, a halogen moisture meter.

The content of the starch having an amylose content of 5 to 25 mass% or the derivative thereof is preferably 10 to 98 mass%, more preferably 15 to 95 mass%, still more preferably 20 to 90 mass%, still even more preferably 25 to 85 mass%, particularly preferably 30 to 80 mass%, more particularly preferably 32 to 78 mass%, extremely preferably 40 to 75 mass%, more extremely preferably 50 to 75 mass%, 55 to 73 mass%, 57 to 70 mass%, 60 to 70 mass%, 61 to 70 mass%, or 62 to 69 mass% with respect to the total mass of the composition. When the content of the starch having an amylose content of 5 to 25 mass% or the derivative thereof is within the range, the stress, toughness and water solubility of the molded article can be enhanced.

In the present invention, the total amount of the starch having an amylose content of 5 to 25 mass% or the derivative thereof and the plasticizer is 50 mass% or more with respect to the total mass of the composition. When the total amount of the starch having an amylose content of 5 to 25 mass% or the derivative thereof and the plasticizer is less than 50 mass%, a molded article excellent in stress, toughness and water solubility cannot be obtained from the composition. The total amount of the starch having an amylose content of 5 to 25 mass% or the derivative thereof and the plasticizer in the composition is preferably 50 to 100 mass%, more preferably 55 to 100 mass%, still more preferably 60 to 100 mass%, still even more preferably 65 to 100 mass%, 70 to 100 mass%, 75 to 100 mass%, 75 to 99 mass%, 75 to 95 mass%, 75 to 90 mass%, or 75 to 85 mass%.

Since the composition of the present invention contains a starch having a specific amylose content or a derivative thereof and a plasticizer, the resulting molded article has high mechanical strength and water solubility, and can also form water-soluble films and fibers, and pouches having such properties. In addition, it is also possible to form a coated article including a substrate coated with the composition. The composition is preferably the same as the composition described in the section of [Composition] above except that the composition contains, as essential components, a starch having an amylose content of 5 to 25 mass% or a derivative thereof and the plasticizer, and the total amount of the starch having an amylose content of 5 to 25 mass% or the derivative thereof and the plasticizer is 50 mass% or more with respect to the total mass of the composition.

### EXAMPLES

Hereinafter, the present invention will be described more specifically based on Examples and Comparative Examples, but the present invention is not limited to the following Examples.

### <Amylose content of starch>

In accordance with the Ministry of Agriculture, Forestry and Fisheries Notification No. 332 Standard Measurement Method "4 Amylose" on March 14, 2001, the amylose content was measured from the absorbance at a wavelength of 620 nm when iodine was adsorbed to starch.

### <Preparation of composition and molded article>

### (Example 1)

To water was added 7.5 g of potato starch (amylose content: 20 mass%, modification: oxidation with sodium hypochlorite), and the mixture was heated with stirring at 95°C for 2 hours to obtain an aqueous solution having a concentration of 4%. Thereto was added 2.5 g of sorbitol as a plasticizer to prepare a coating liquid. The coating liquid was applied onto a polyethylene terephthalate film with a bar coater, and dried with hot air for 1 hour. The obtained dry coating film was peeled off from the polyethylene terephthalate film substrate to obtain a molded article (film) having a thickness of about 50 µm.

### (Examples 2 to 24 and Comparative Examples 1 to 10)

Molded articles (films) were obtained in the same manner as in Example 1 except that the type and amount of starch to be used and the amount of the plasticizer to be used were changed as shown in Table 1.

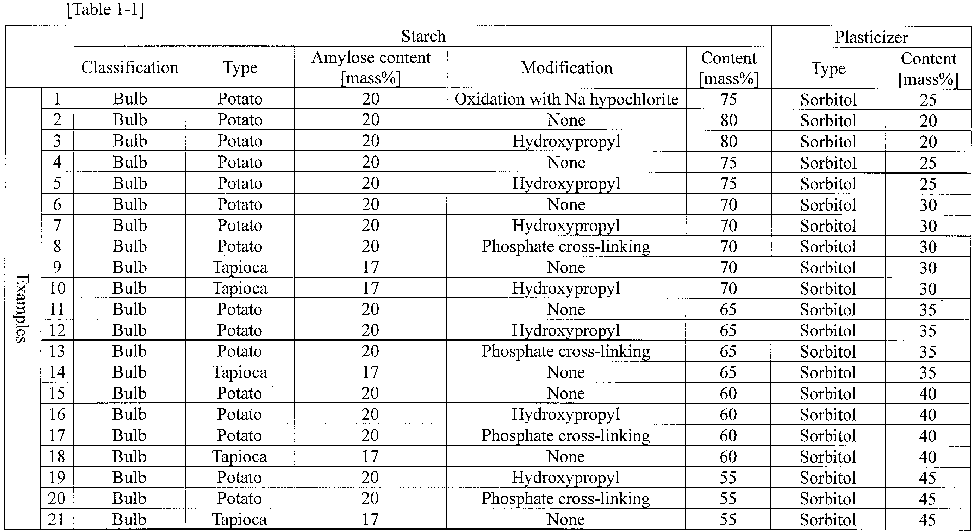

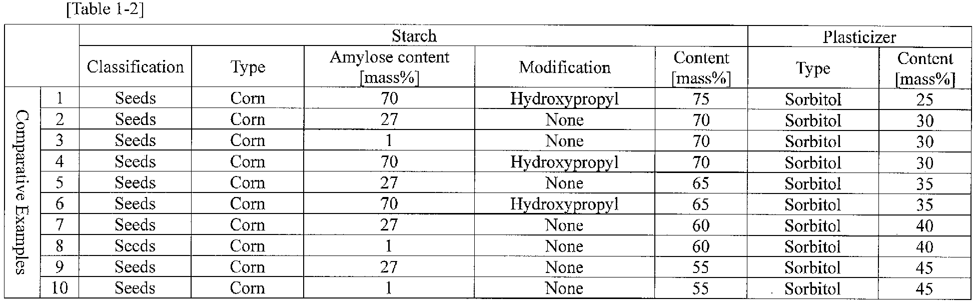

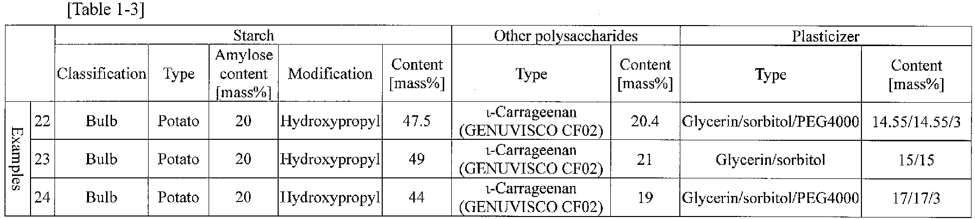

### <Evaluation of molded article>

### (Water solubility)

The molded article produced in each of Examples and Comparative Examples was added to hot water at 90°C, and the molded article was dissolved by stirring for 5 minutes. Then, the amount of solid content that did not pass through a filter (pore size: 21 µm) was measured, and evaluation was performed according to the following evaluation criteria. The mass of the added molded article was 0.1 parts by mass per 100 parts by mass of hot water at 90°C.
A: The solid content that does not pass through the filter is 10 mass% or less.
B: The solid content that does not pass through the filter is more than 10 mass%.

### (Toughness)

The molded article produced in each of Examples and Comparative Examples was stored under an environment of 23°C and a humidity of 50%RH for 7 days. Then, five test pieces each having a width of 25.4 mm and a length of 127 mm were cut out. The maximum stress and the elongation at break were measured for each of the prepared test pieces at a distance between chucks of 25.4 mm and a tensile speed of 500 mm/min using an autograph (instrument name: AG-5000B, Shimadzu Corporation), and the average values thereof were determined. The value of maximum stress × elongation at break was defined as the toughness of the molded article.

The evaluation results are shown in Table 2.

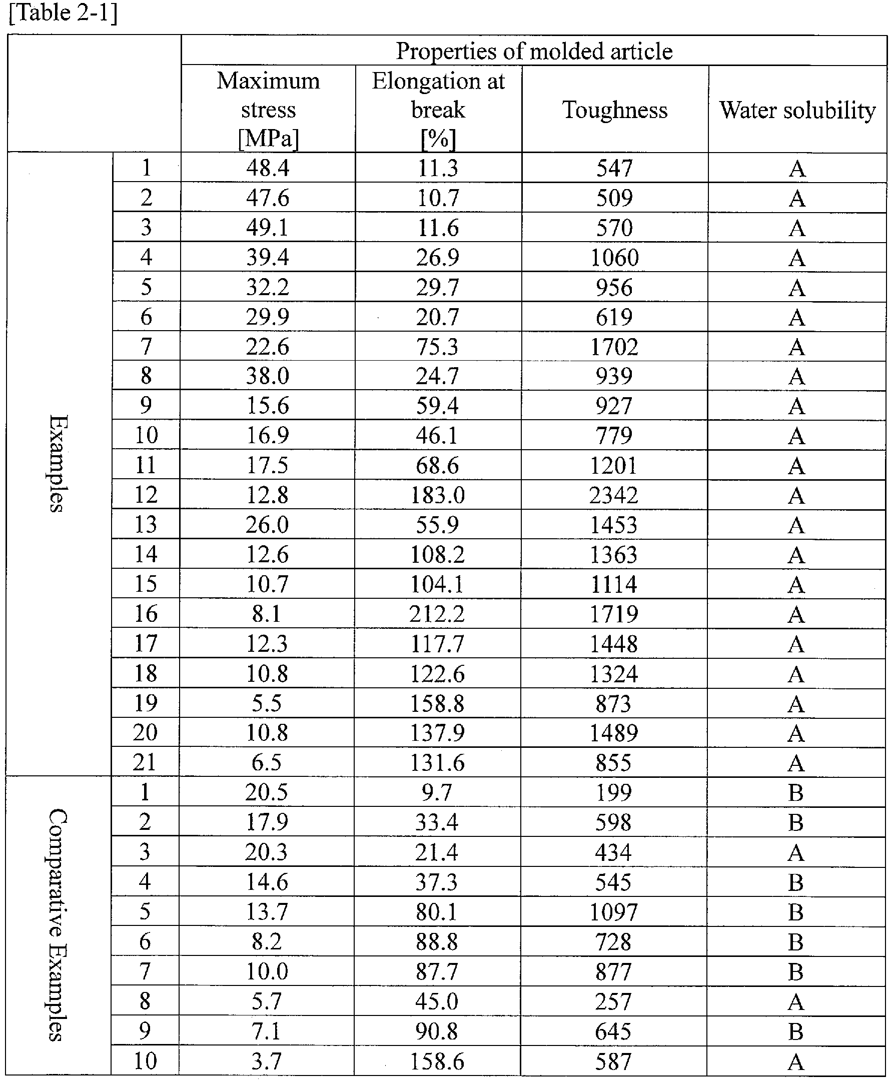

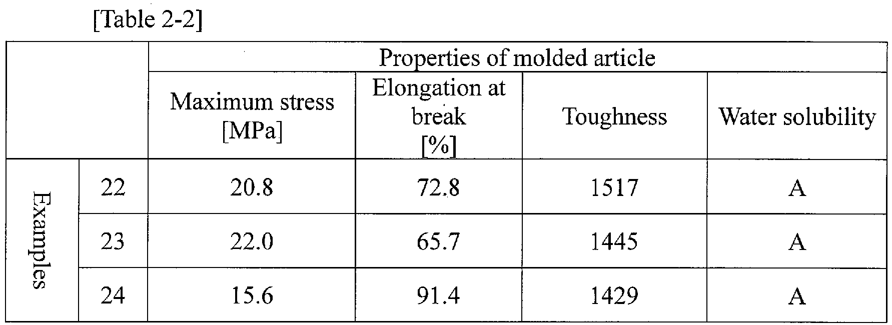

Table 2 shows that the molded articles obtained from the compositions of Examples 1 to 24 had high stress, toughness and water solubility. On the other hand, the molded articles obtained from the compositions of Comparative Examples 1 to 10 were insufficient in at least one of stress, toughness, and water solubility. Therefore, it was found that a molded article excellent in stress, toughness and water solubility can be obtained from the composition of the present invention.

### <Preparation and evaluation of pouch>

Water is applied to the obtained molded article, and the applied surfaces are bonded to each other to produce a pouch, and the sealability, the compression test of the pouch, and the water solubility of the pouch are evaluated.

The pouches of Examples have high compressive strength and excellent mechanical strength. In addition, the pouches of Examples are formed of the molded article of the present invention, and thus reflect the physical properties of the molded article and are excellent in water solubility. Further, the sealability of the molded article constituting the pouch is favorable.

## Claims

1. A composition comprising a starch derived from a bulb or a derivative thereof, and a plasticizer, wherein
a total amount of the starch derived from a bulb or the derivative thereof and the plasticizer is 50 mass% or more with respect to a total mass of the composition.

2. A composition comprising a starch having an amylose content of 5 to 25 mass% or a derivative thereof, and a plasticizer, wherein
a total amount of the starch having an amylose content of 5 to 25 mass% or the derivative thereof and the plasticizer is 50 mass% or more with respect to a total mass of the composition.

3. The composition according to claim 1 or 2, wherein the starch is at least one selected from the group consisting of potato starch, sweet potato starch, tapioca starch, lily bulb starch, taro starch, Chinese yam starch, lotus root starch, kudzu starch, and arrowhead starch.

4. The composition according to claim 1 or 2, wherein the starch is potato starch and/or tapioca starch.

5. The composition according to claim 1 or 2, wherein a content of the starch or the derivative thereof is 10 to 98 mass% with respect to the total mass of the composition.

6. The composition according to claim 1 or 2, wherein the plasticizer is at least one selected from the group consisting of a polyhydric alcohol, a hydroxy acid, a monosaccharide, and a disaccharide.

7. The composition according to claim 1 or 2, wherein a content of the plasticizer is 2 to 90 mass% with respect to the total mass of the composition.

8. The composition according to claim 1 or 2, further comprising at least one polysaccharide.

9. The composition according to claim 8, wherein the polysaccharide is at least one selected from the group consisting of carrageenan, alginic acid, guar gum, xanthan gum, hydroxyalkyl cellulose, alkyl cellulose, tamarind seed gum, locust bean gum, tara gum, and derivatives thereof.

10. The composition according to claim 8, wherein the polysaccharide is at least one selected from the group consisting of carrageenan and derivatives thereof.

11. A molded article comprising the composition according to claim 1 or 2.

12. A coated article comprising a substrate coated with the composition according to claim 1 or 2.

13. The molded article according to claim 11, wherein the molded article has a maximum stress of 4 MPa or more and/or a toughness of 440 or more.

14. The molded article according to claim 11, wherein the molded article is a water-soluble film or a fiber.

15. A pouch comprising the molded article according to claim 11.

16. The pouch according to claim 15, wherein the pouch comprises at least one selected from the group consisting of a cleaning agent, a softener, and a perfume therein.

17. A packaging material comprising the molded article according to claim 11.
